# EUROPÄISCHE PATENTSCHRIFT

(11) **EP 2 937 493 B1**
(45) Veröffentlichungstag und Bekanntmachung des Hinweises auf die Patenterteilung: **25.03.2020**
(21) Anmeldenummer: 14165465.7
(22) Anmeldetag: 22.04.2014
(51) Int. Cl.: E04G 15/06

(54) **DURCHFÜHRUNG ZUM EINBAU IN EIN WAND- ODER BODENELEMENT**
FEED-THROUGH FOR A FLOOR OR CEILING ELEMENT
PASSAGE ENCASTRABLE DANS UN ÉLÉMENT DE MUR OU DE SOL

(43) Veröffentlichungstag der Anmeldung: 28.10.2015
(73) Patentinhaber: Hauff-Technik GmbH & Co. KG, 89568 Hermaringen (DE)
(72) Erfinder: Kurz, Ralf, 89537 Giengen (DE); Seibold, Dr. Michael, 89134 Blaustein (DE); Scheuring, Horst, 89182 Bernstadt (DE)
(74) Vertreter: König Szynka Tilmann von Renesse Patentanwälte Partnerschaft mbB

(56) Entgegenhaltungen:
- EP-A1- 2 363 552
- GB-A- 2 171 139
- JP-A- 2009 264 516
- KR-A- 20100 060 109
- KR-A- 20120 129 514
- US-B1- 6 792 726

## Beschreibung

Die vorliegende Erfindung betrifft eine Durchführung, die dazu vorgesehen ist, baulich in ein Wand- oder Bodenelement integriert zu werden, und zwar durch Vergießen mit zunächst fließfähigem und dann erstarrendem Material.

Zu diesem Zweck aus dem Stand der Technik bekannte Durchführungen bestehen aus einem Rohrelement, das in einer Schalung montiert und beim Gießen des Wand- oder Bodenelements von dem Vergussmaterial umschlossen wird. Nach dem Härten des Vergussmaterials und dem Entfernen der Schalungselemente hält die Durchführung dann eine Durchgangsöffnung zwischen den entgegengesetzten Seitenflächen des Wand- oder Bodenelements frei. Es kann dann beispielsweise ein Kabel von einer Seite eines entsprechenden Wandelements durch die Durchführung hindurch zur entgegengesetzten Seite geführt werden, etwa von außen her in ein Gebäude.

Die US 6,792,726 B1 betrifft eine Bodendurchführung mit einem Flanschelement aus Gummi oder Neopren, in das eine steife Hülse eingeschoben ist.

Die GB 2 171 139 A betrifft eine Wanddurchführung mit einem Rohr- und einem Flanschelement zur Befestigung an der Schalung, wobei das Rohrelement mit einem reversibel heraus- und wiedereinsetzbaren Deckel verschlossen ist.

Die EP 2 363 552 A1 betrifft einen Aufsatz, der auf ein Rohr aufgeschoben und gemeinsam damit einaeaossen wird. Anschließend dient der Aufsatz als Muffe zum Einschieben eines weiteren Rohres. Dieses Dokument offenbart alle technischen Merkmale des Oberbegriffs des Anspruchs 1.

Die JP 2009264516 A betrifft eine Durchführung, die aus zwei ineinander verschiebbaren Rohrstücken und damit längenverstellbar aufgebaut ist. Die KR 20120129514 A betrifft ebenfalls eine längenverstellbare, aus zwei ineinander verschiebbaren Rohrstücken aufgebaute Durchführung.

Der vorliegenden Erfindung liegt die Aufgabe zugrunde, eine vorteilhafte Durchführung anzugeben.

Erfindungsgemäß löst diese Aufgabe eine Durchführung gemäß Anspruch 1. Bevorzugte Ausführungsformen finden sich in den abhängigen Ansprüchen und der nachstehenden Beschreibung.

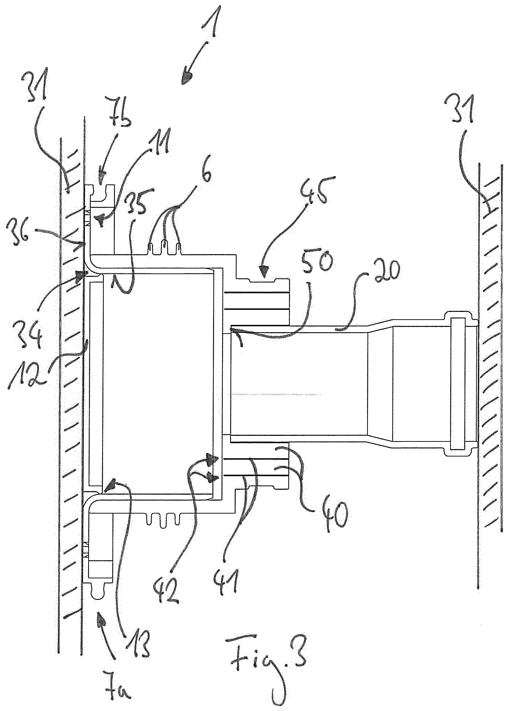

Eine Grundidee der vorliegenden Erfindung besteht darin, etwa dem Betonbauer, der sie in dem Wand- oder Bodenelement verbaut, keine Durchführung an die Hand zu geben, die bereits für sich alleine vergossen wird. Stattdessen wird mit der Durchführung ein flexibles Bauteil zur Verfügung gestellt, das der Betonbauer zum Beispiel auf ein vor Ort auf der Baustelle vorrätiges KG-Rohr oder Schutzrohr setzen kann, wobei dieses Rohr dann auch ein Durchführungsteil ist und zusammen mit der Durchführung die Durchgangsöffnung zwischen den entgegengesetzten Seitenflächen des Wand- oder Bodenelements freihält (siehe Figur 3 zur Illustration). Durch diese kann dann beispielsweise ein Kabel hindurchgeführt werden.

Die Mehrteiligkeit von Aufsetz- und Einsetzstück kann insoweit Vorteile bieten, als das Einsetzstück z. B. bereits in einer Schalung montiert sein kann, das Aufsetzstück jedoch gleichwohl noch abnehmbar ist, um es mit den auf der Baustelle vorrätigen Rohren abzugleichen und so ein geeignetes Rohr als Durchführungsteil auszuwählen.

Die erfindungsgemäße Durchführung ist also zunächst mehrteilig aufgebaut, nämlich aus Aufsetzstück und Einsetzstück. Das Einsetzstück ist mit seinem Rohrabschnitt in den Aufsetzabschnitt des Einsetzstücks eingeschoben und stabilisiert das Aufsetzstück so beim Vergießen. Das Aufsetzstückmaterial ist weicher als das Einsetzstückmaterial, weswegen das Aufsetzstück von den beim Vergießen wirkenden Kräften auch eher in ungewünschter Weise verformt werden könnte. Das "weichere" Aufsetzstückmaterial kann beispielsweise eine Bruchdehnung von mindestens 150 %, vorzugsweise mindestens 200 %, weiter bevorzugt mindestens 250 %, haben; mögliche Obergrenzen liegen etwa bei höchstens 400 % bzw. höchstens 350 %. Das Einsetzstückmaterial kann demgegenüber beispielsweise eine Bruchdehnung von höchstens 10 %, vorzugsweise höchstens 5 %, haben; mögliche Untergrenzen liegen z. B. bei mindestens 1 % bzw. mindestens 2 %.

Die "Stabilisierung" meint also, dass der Einsetzstück-Rohrabschnitt das Aufsetzstück im Aufsetzabschnitt nach innen abstützt, also gegenüber einer unerwünschten Verformung zur Mittenachse der Leitung hin. Bezogen auf eine in Leitungsrichtung genommene Länge des Aufsetzstücks soll eine solche Stabilisierung über beispielsweise mindestens 20 %, vorzugsweise mindestens 30 %, weiter bevorzugt mindestens 40 %, der Längenerstreckung gegeben sein; eine bevorzugte Obergrenze kann etwa bei 60 % liegen. In anderen Worten soll sich das Einsetzstück über eine entsprechende Länge in dem Aufsetzstück erstrecken und letzteres so nach innen abstützen.

Ein Vorteil des weicheren Aufsetzstückmaterials kann etwa in einer guten Dichtwirkung sowohl zum Wand- oder Bodenelement hin als auch zu einer eingeschobenen Leitung hin bestehen. Das weichere Aufsetzstückmaterial kann beispielsweise auch einen gewissen Schrumpf ausgleichen, der beispielsweise bei einem bevorzugten Betonverguss auftreten kann.

Das Aufsetzstück und das Einsetzstück der erfindungsgemäßen Durchführung sind zueinander mehrteilig, sind also beispielsweise nicht in einem ZweiKomponenten-Spritzgussverfahren aneinander angeformt, sondern werden als zuvor jeweils für sich bereits hergestellte Teile ineinander gesetzt. So lässt sich einerseits die kombinierte Wirkung "Dichtung"/"Stabilisierung" erreichen, wobei das jeweilige Herstellungsverfahren auf das jeweilige Material, also das Einsetzstückmaterial oder das Aufsetzstückmaterial, hin optimiert werden kann. Zudem eröffnet die Mehrteiligkeit eine Modularität, können nämlich, wie nachstehend im Detail erläutert, auf ein Einsetzstück bedarfsweise unterschiedliche Aufsetzstücke gesetzt werden, die sich beispielsweise hinsichtlich der zum Einschieben der Leitung vorgesehenen Durchgangsöffnungen unterscheiden.

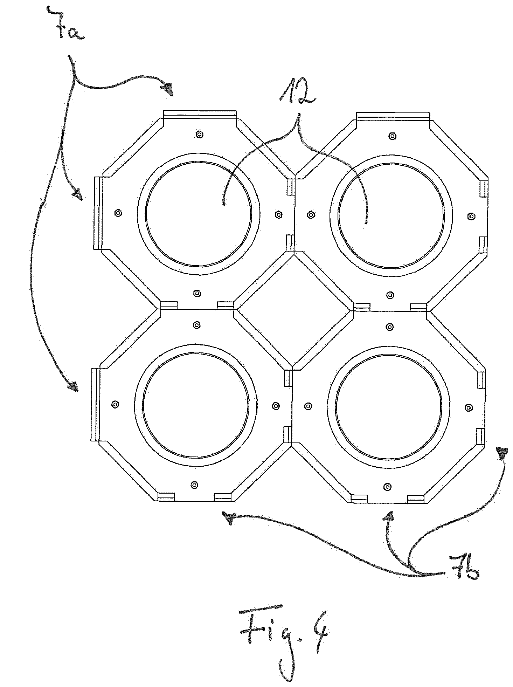

Die Mehrteiligkeit kann aber auch hinsichtlich der Montage der Durchführung an einem Schalungselement Vorteile bieten. Das Einsetzstück ist ja so vorgesehen, dass es mit dem Einsetzstück einer weiteren Durchführung formschlüssig zusammenbaubar ist, sodass vorzugsweise ein formschlüssig zusammengehaltener Verbund mehrerer Einsetzstücke gemeinsam an einem Schalungselement befestigt wird. Diese Befestigung erfolgt bevorzugt durch ein Vernageln oder Verschrauben eines jeweiligen Montageflansches mit dem Schalungselement, vergleiche die zu diesem Zweck in den Montageflanschen der Aufsetzstücke des Moduls gemäß Figur 4 vorgesehenen Befestigungslöcher. Die Montagesituation ist in Figur 3 veranschaulicht, die Nägel bzw. Schrauben werden von innerhalb der Schalung und damit von jener Seite des Montageflansches her eingebracht, auf welcher eben auch jeweils die übrige Durchführung angeordnet ist.

Die Erfinder haben festgestellt, dass dabei die Zugänglichkeit der Befestigungslöcher in einem Modul aus mehreren Einsetzstücken bzw. Durchführungen eingeschränkt sein kann. Bei aufgesetztem Aufsetzstück ist der Raum zwischen den einzelnen Durchführungen weiter verringert, und es kann etwa beim Handhaben eines Hammers auch zu einer Beschädigung des weicheren Aufsetzstücks kommen. Dies könnte dann letztlich auch die Dichtwirkung beeinträchtigen.

Aufgrund der Mehrteiligkeit kann nun in einer solchen Montagesituation das Aufsetzstück von dem Einsetzstück genommen werden, kann also zunächst das Einsetzstück an der Schalung befestigt werden, eben beispielsweise durch Vernageln, und kann dann das Aufsetzstück aufgeschoben werden, was einer Beschädigung vorbeugen hilft.

Für den Zusammenbau zu einem Modul weist der Montageflansch das Verbindungselement auf, das als ein erstes und ein zweites Formschlusselement vorgesehen ist. Diese Formschlusselemente sind dabei derart komplementär zueinander ausgelegt, dass das erste Formschlusselement mit einem zweiten Formschlusselement einer ersten weiteren Durchführung formschlüssig verbindbar ist und das zweite Formschlusselement beispielsweise mit einem ersten Formschlusselement einer zweiten weiteren Durchführung formschlüssig verbindbar ist. Die Durchführungen sind dabei jedenfalls hinsichtlich ihres jeweiligen Montageflansches baugleich, haben also insoweit dieselbe Geometrie und dieselben Maße.

Der Montageflansch ist vorzugsweise eine sich hinsichtlich ihrer Plattenrichtungen quer, besonders bevorzugt senkrecht, zur Leitungsrichtung erstreckende Flanschplatte. Diese hat senkrecht zu den Plattenrichtungen, also in Leitungsrichtung, eine geringere Erstreckung als in den Plattenrichtungen. Das erste und das zweite Formschlusselement sind vorzugsweise an einer Seitenkante der Flanschplatte vorgesehen, vorzugsweise jeweils an einer eigenen Seitenkante.

Vorzugsweise hat der Montageflansch in Leitungsrichtung gesehen eine polygonförmige Außenkontur, die mit entsprechend polygonförmigen Montageflanschen weiterer Durchführungen sich derart ergänzend zusammenbaubar ist, dass nächst benachbarte Montageflansche in Leitungsrichtung gesehen eine linienförmige Anlage aneinander haben, nämlich zumindest dort, wo die Formschlusselemente angeordnet sind. Bevorzugt sind die Montageflansche dabei sich derart flächig ergänzend zusammenbaubar, dass eine von den Montageflanschen gebildete Fläche eine Unterbrechung/ Unterbrechungen aufweist, vergleiche die Aufsicht in Figur 4.

Eine in Leitungsrichtung gesehen achteckige Montageflansch-Außenkontur ist auch in dieser Hinsicht bevorzugt. Im Falle eines aus einer Mehrzahl Durchführungen aufgebauten Moduls kann eine eben beschriebene Unterbrechung in der aus den einzelnen Montageflanschen aufgebauten Fläche etwa insoweit Vorteile bieten, als dann die Seitenfläche des Wand- oder Bodenelements in definierten Bereichen frei liegt, also beispielsweise einem Installateur ein Bereich vordefiniert wird, in dem für weitergehende Installationen z.B. ein Loch gebohrt werden könnte.

Das erste und das zweite Formschlusselement können vorzugsweise Nut- und Feder-artig ineinandergreifen, und zwar mit einer Hinterschneidung, sodass zum Herstellen der formschlüssigen Verbindung und auch zum Lösen ein gewisser Kraftaufwand notwendig ist. Bevorzugt ist also ein Verrasten von erstem und zweitem Formschlusselement, wobei diese Rastverbindung vorzugsweise auch wieder zerstörungsfrei lösbar sein soll. Eine Verbindungsrichtung, in welcher das erste und das zweite Formschlusselement (der beiden Durchführungen) zur Herstellung des Formschlusses ineinandergeschoben werden, liegt vorzugsweise schräg, besonders bevorzugt senkrecht, zur Leitungsrichtung.

Bevorzugt ist eine Anordnung von erstem und zweitem Formschlusselement derart, dass die beiden an hinsichtlich einer zur Mittenachse der Leitung senkrechten Richtung entgegengesetzten Außenkanten der Flanschplatte liegen. Besonders bevorzugt sind zwei solcher Formschlusselement-Paare, die dann hinsichtlich der Umlaufrichtung äquidistant aufeinander folgend angeordnet sind; die eben genannte, zur Mittenachse der Leitung senkrechte Richtung des einen entgegengesetzt angeordneten Paares ist also gegenüber der äquivalenten Richtung des anderen Paares in Umlaufrichtung um 90° verdreht.

In den Leitungsabschnitt des Aufsetzstückes ist eine Leitung einschiebbar, eine Innenwandfläche des Leitungsabschnitts begrenzt also eine Durchgangsöffnung; ist bei einer Durchführungsanordnung die Leitung in diese Durchgangsöffnung eingeschoben, liegt die Leitung bevorzugt mit einer Außenwandfläche an der Innenwandfläche des Leitungsabschnitts an.

Das "weichere" Aufsetzstückmaterial hat vorzugsweise eine Shore-Härte (Shore A) von höchstens 70 Shore A und das "härtere" Einsetzstückmaterial eine Shore-Härte (Shore D) von mindestens 40 Shore D. Bei einem entsprechenden Verhältnis kann ein "weiches" Aufsetzstück gut dichten und zugleich von dem "harten" Einsetzstück gut stabilisiert sein.

Generell kann für das Aufsetzstückmaterial beispielsweise eine Shore-Härte (jeweils Shore A) von höchstens 70 Shore, in dieser Reihenfolge zunehmend bevorzugt höchstens 65 Shore, 60 Shore, 57,5 Shore, bevorzugt sein, wobei mögliche (von den Obergrenzen unabhängige) Untergrenzen beispielsweise bei mindestens 40 Shore, 45 Shore bzw. 50 Shore liegen können. Neben den Vorteilen die Dichtigkeit betreffend kann ein "weiches" Aufsetzstück auch hinsichtlich der Mehrteiligkeit mit dem Einsetzstück Vorteile bieten, weil beispielsweise eine angesichts der gewünschten Modularität denkbare Fehlpassung zwischen Einsetz- und Aufsetzstück ausgeglichen werden kann. Eine solche Fehlpassung kann auch bewusst eingestellt werden, sodass das Einsetzstück nicht lose verrutschbar in dem Aufsetzstück sitzt, sondern einen etwas größeren Durchmesser hat. Das Aufsetzstück wird also beim Einschieben des Einsetzstücks etwas geweitet, was eben im Falle eines "weicheren" Aufsetzstückmaterials auch einfacher möglich sein kann.

Auch unabhängig von der spezifischen Shore-Härte wird als Aufsetzstückmaterial bevorzugt ein Gummimaterial vorgesehen, besonders bevorzugt synthetisches Gummimaterial, auch aufgrund dessen elastischer Materialeigenschaften. Das vorzugsweise synthetische Gummimaterial kann beispielsweise auf der Basis von synthetischem Kautschuk hergestellt sein.

Das Aufsetzstück kann beispielsweise durch Pressen von synthetischem Gummimaterial in einer Form und Vulkanisieren desselben in der Form hergestellt werden. Der Form wird vorzugsweise bei Raumtemperatur fließfähiges, das heißt mit bestimmter Viskosität flüssiges, synthetisch hergestelltes Kautschukmaterial zugeführt, das dann in der Form gepresst wird, etwa bei einem Druck von mindestens 80 bar, weiter bevorzugt mindestens 90 bar bzw. 95 bar, und von (von den Untergrenzen unabhängig) höchstens 120 bar, weiter bevorzugt höchstens 110 bar bzw. 105 bar. Die Temperatur beim Pressen liegt über der Raumtemperatur, insbesondere bei mindestens 170 °C, weiter bevorzugt bei mindestens 180 °C bzw. 190 °C; als (davon unabhängig) Maximaltemperatur sind 210 °C bevorzugt und sind 200 °C weiter bevorzugt. Generell kann das synthetische Kautschukmaterial beispielsweise Styrol, Butadien, Styrolacrylat, Reinacrylat bzw. Vinylacetat als Bestandteil aufweisen. Ein bevorzugtes Aufsetzstückmaterial kann Ethylen-Propylen-Dien-Kautschuk (EPDM) sein.

Ein bevorzugtes Einsetzstückmaterial kann beispielsweise Acrylnitril-Butadien-Styrol (ABS), Polystyrol (PS) und/oder Polyethylen (PE) aufweisen, besonders bevorzugt aus genau einem davon bestehen.

Auch unabhängig vom spezifischen Material im Einzelnen kann das Einsetzstückmaterial beispielsweise eine Shore-Härte (jeweils Shore D) von mindestens 40 Shore, vorzugsweise mindestens 45 Shore, weiter bevorzugt mindestens 50 Shore, haben; mögliche Obergrenzen liegen beispielsweis bei höchstens 100 Shore, vorzugsweise höchstens 90 Shore, weiter bevorzugt höchstens 80 Shore.

Soweit generell im Rahmen dieser Offenbarung auf das Aufsetzstück- und das Einsetzstückmaterial Bezug genommen wird, betrifft dies das jeweilige Material in konkret seiner Beschaffenheit in der Durchführung, also nicht die Materialeigenschaften, die das Material etwa bei einer anderen Prozessierung theoretisch haben könnte. Es geht also nicht um einen materialseitig theoretisch zugänglichen Parameterraum sondern um konkret die Eigenschaften des jeweiligen Materials in seinem für die Durchführung vorgesehenen Zustand.

In bevorzugter Ausgestaltung ist der Einsetzstück-Rohrabschnitt derart in Leitungsrichtung in den Aufsetzstück-Aufsetzabschnitt einschiebbar, vorzugsweise eingeschoben, dass eine Außenwandfläche des Rohrabschnitts flächig an einer Innenwandfläche des Aufsetzabschnitts anliegt. Soweit im Allgemeinen die eingangs beschriebene Stabilisierungsfunktion beispielsweise auch erreicht werden könnte, wenn zwischen den beiden Wandflächen eine Hülse angeordnet wäre (deren Innenwandfläche an der Außenwandfläche des Einsetzstück-Rohrabschnitts und deren Außenwandfläche an der Innenwandfläche des Aufsetzabschnitts anliegen würde), ist ein direkter Kontakt von Aufsetz- und Einsetzstück dort bevorzugt, etwa auch hinsichtlich eines einfachen Aufbaus.

Eine Anlagefläche, also eine Kontaktfläche zwischen Außenwandfläche des Rohrabschnitts und Innenwandfläche des Aufsetzabschnitts, kann in Leitungsrichtung beispielsweise eine Erstreckung von mindestens 20 %, in dieser Reihenfolge zunehmend bevorzugt mindestens 25 %, 30 %, 35 % bzw. 40 %, der in Leitungsrichtung genommenen Längenerstreckung des Aufsetzstücks haben; bevorzugte Obergrenzen können etwa bei höchstens 60 % bzw. höchstens 50 % liegen. Die Anlagefläche erstreckt sich (hinsichtlich eines Umlaufs um die Mittenachse der Leitung) vorzugsweise vollständig umlaufend mit einer entsprechenden Mindesterstreckung. In absoluten Werten kann sich die Anlagefläche in Leitungsrichtung beispielsweise über mindestens 40 mm, vorzugsweise mindestens 60 mm, weiter bevorzugt mindestens 80 mm, erstrecken; von den Untergrenzen unabhängige Obergrenzen liegen etwa bei höchstens 300 mm, bevorzugt höchstens 200 mm bzw. 100 mm.

Wenngleich der Montageflansch im Allgemeinen auch nach innen zurückversetzt vorgesehen sein könnte, sodass er dann also innerhalb des Wand- oder Bodenelements läge, ist ein sich endseitig des Rohrabschnitts angeordneter Montageflansch bevorzugt. Der Montageflansch grenzt dann also an eine Seitenfläche des Wand- oder Bodenelements, ist also auf die Seitenfläche blickend sichtbar.

Eine zur Außenwandfläche des Einsetzstück-Rohrabschnitts senkrechte Projektion des "endseitigen" Montageflansches soll sich also von dem Ende des Rohrabschnitts, das dem in das Aufsetzstück einschiebbaren Ende entgegengesetzt liegt, weg erstrecken, was vorzugsweise vollständig umlaufend gilt. Weiter bevorzugt soll sich besagte Projektion des Montageflansches dann um nicht mehr als 50 %, vorzugsweise nicht mehr als 40 %, weiter bevorzugt nicht mehr als 30 %, der in Leitungsrichtung genommenen Längenerstreckung des Einsetzstückes von dem Ende des Rohrabschnitts weg erstrecken, was wiederum bevorzugt vollständig umlaufend gilt.

Eine bevorzugte Ausführungsform betrifft den Übergang zwischen der Innenwandfläche des Einsetzstück-Rohrabschnitts und einer der übrigen Durchführung abgewandten Seitenfläche des endseitig am Rohrabschnitt angeordneten Montageflansches. Dieser Übergang soll glatt, also ohne Kante verlaufen. "Kantenfrei" meint in einer die Mittenachse der Leitung beinhaltenden Schnittebene betrachtet, dass eine durch den Übergang vorgegebene Kurve keinen Knick zeigt, also stetig differenzierbar verläuft, was vorzugsweise für sämtliche die Mittenachse der Leitung beinhaltenden Schnittebenen gilt.

Der Krümmungsradius des Übergangs soll vorzugsweise mindestens 1 %, weiter bevorzugt mindestens 2 %, besonders bevorzugt mindestens 3 %, des Innendurchmessers des Einsetzstück-Rohrabschnitts ausmachen, und zwar des Innendurchmessers in einem Bereich des Rohrabschnitts, in dem sich der Innendurchmesser nicht ändert (also nicht im Bereich des Übergangs). In absoluten Werten kann ein Krümmungsradius von mindestens 1 mm, in dieser Reihenfolge zunehmend bevorzugt mindestens 2 mm, 3 mm, 4 mm bzw. 5 mm, bevorzugt sein.

Soweit generell im Rahmen dieser Offenbarung auf einen "Durchmesser" Bezug genommen wird, soll dies im Allgemeinen nicht zwingend auf eine Kreisgeometrie zu lesen sein, sondern ist zunächst der Mittelwert aus der kleinsten und der größten Erstreckung einer Fläche gemeint, der im bevorzugten Fall der Kreisgeometrie dem Kreisdurchmesser entspricht.

Der Einsetzstück-Rohrabschnitt hat vorzugsweise eine in Leitungsrichtung genommene Länge von mindestens 40 mm, weiter bevorzugt mindestens 60 mm, besonders bevorzugt mindestens 80 mm; von den Untergrenzen unabhängige Obergrenzen können beispielsweise bei höchstens 300 mm, vorzugsweise höchstens 200 mm, weiter bevorzugt höchstens 100 mm, liegen.

Der Innendurchmesser des Einsetzstück-Rohrabschnitts kann beispielsweise mindestens 45 mm, vorzugsweise mindestens 70 mm, weiter bevorzugt mindestens 80 mm, betragen, wobei mögliche (von den Untergrenzen unabhängige) Obergrenzen etwa bei höchstens 300 mm, vorzugsweise höchstens 280 mm, weiter bevorzugt höchstens 250 mm, liegen. Der Rohrabschnitt ist auch aufgrund einer Gewichtsoptimierung vorzugsweise als dünnwandiger Körper ausgeführt, sodass also der Außendurchmesser um beispielsweise nicht mehr als 10 %, vorzugsweise nicht mehr als 5 %, besonders bevorzugt nicht mehr als 3 %, über dem Innendurchmesser liegt (also entsprechend in einem um 10 %, 5 % bzw. 3 % größeren Intervall).

Eine für eine Anlage an der Außenwandfläche der Leitung vorgesehene Innenwandfläche des Aufsetzstücks kann sich in absoluten Werten ausgedrückt in Leitungsrichtung über beispielsweise mindestens 20 mm, vorzugsweise mindestens 40 mm, weiter bevorzugt mindestens 60 mm, erstrecken; von den Untergrenzen unabhängige Obergrenzen liegen etwa bei höchstens 200 mm bzw. höchstens 150 mm. Bezogen auf die in Leitungsrichtung genommene Länge des Aufsetzstücks kann sich besagte Innenwandfläche in Leitungsrichtung beispielsweise über mindestens 5 %, in dieser Reihenfolge zunehmend bevorzugt mindestens 10 %, 15 %, 20 % bzw. 25 % der in Leitungsrichtung genommenen Längenerstreckung des Aufsetzstücks erstrecken; mögliche Obergrenzen liegen bei höchstens 60 %, 50 % bzw. 40 %. Die Werte sollen entsprechend auch für eine Anlagefläche zwischen Außenwandfläche der Leitung und Innenwandfläche des Aufsetzstücks offenbart sein.

Der Leitungsabschnitt kann im Bereich der zur Anlage an der Leitung vorgesehenen Innenwandfläche beispielsweise einen Innendurchmesser von mindestens 45 mm, vorzugsweise mindestens 70 mm, weiter bevorzugt mindestens 80 mm, haben; mögliche Obergrenzen liegen etwa bei höchstens 300 mm, vorzugsweise höchstens 280 mm, weiter bevorzugt höchstens 250 mm.

Bei einer bevorzugten Durchführung ist das Aufsetzstück so vorgesehen, dass der Leitungsabschnitt und der Aufsetzabschnitt in Leitungsrichtung aufeinanderfolgend angeordnet sind. In anderen Worten ist der Bereich, in dem der Einsetzstück-Rohrabschnitt das Aufsetzstück nach innen hin stützt, dann auf einer Seite einer zur Leitungsrichtung senkrechten Ebene angeordnet und liegt die zur Anlage an der Außenwandfläche der Leitung vorgesehene Innenwandfläche des Aufsetzstücks auf der anderen Seite dieser Ebene. Ein Vorteil hiervon kann beispielsweise darin bestehen, dass so der Aufsetzstück-Leitungsabschnitt also nicht innerhalb des Einsetzstück-Rohrabschnitts angeordnet werden muss, sodass in diesem Innenraum dann später beispielsweise eine Pressdichtung eingesetzt werden kann, um die Durchführung z.B. gegen ein hindurchgeführtes Kabel zu dichten.

Vorzugsweise ist auf dem Aufsetzstück-Leitungsabschnitt ein Spannelement vorgesehen, mittels welchem das Aufsetzstück auf die eingeschobene Leitung anpressbar ist, vorzugsweise eine Spannschelle. Für das Spannelement kann außenseitig am Leitungsabschnitt eine Aufnahme vorgesehen sein, die es gegen ein Verrutschen in Leitungsrichtung sichert, etwa eine umlaufende Ausnehmung.

Erfindungsgemäß ist ein Ende des Einsetzstück-Rohrabschnitts mit einem einteilig mit dem übrigen Einsetzstück ausgebildeten Deckel verschlossen, und zwar das dem in den Aufsetzabschnitt des Aufsetzstücks einschiebbaren Ende entgegengesetzte Ende. Der Deckel ist vorzugsweise in einer Ebene mit einer vorstehend beschriebenen Flanschplatte angeordnet. Vorzugsweise ist ein Übergangsbereich zwischen Deckel und übrigem Einsetzstück als Sollbruchstelle mit verringerter Wandstärke ausgeführt, sodass der Deckel dann nach dem Vergießen der Durchführung in dem Wand- oder Bodenelement und nach einem Entfernen der Schalung leicht ausgetrennt werden kann, etwa durch Ausschlagen.

In bevorzugter Ausgestaltung wird die Einschiebbarkeit der Leitung in den Aufsetzstück-Leitungsabschnitt durch einen Anschlag begrenzt, kann die Leitung also bis zum Erreichen des Anschlags eingeschoben werden, wobei die Außenwandfläche der Leitung beispielsweise entlang einer Innenwandfläche des Aufsetzstücks verschoben wird.

Bei einer bevorzugten Ausführungsform kann das Aufsetzstück einen solchen Anschlag zur Verfügung stellen, und zwar vorzugsweise an einem sich gegenüber der eben genannten Innenwandfläche des Aufsetzstücks nach innen weg erstreckenden, mit dem übrigen Aufsetzstück einteiligen Steg, besonders bevorzugt einem umlaufenden Steg. Die Leitung kommt beim Einschieben dann mit ihrer Stirnseite an dem Anschlag zum Liegen.

Im Allgemeinen auch in Verbindung damit, vorzugsweise jedoch alternativ dazu, kann auch das Einsetzstück einen Anschlag für das Einschieben der Leitung zur Verfügung stellen. Vorzugsweise wird dieser dann von einem sich durch den Einsetzstück-Rohrabschnitt erstreckenden Abstandshalter, etwa einem Stift oder einer Wand, gebildet. Der Abstandshalter ist an einem vorstehend beschriebenen Deckel, der den Rohrabschnitt endseitig verschließt, vorgesehen. Ein Vorteil kann beispielsweise darin bestehen, dass der Abstandshalter dann mit dem Austrennen des Deckels entfernt wird, sodass dann also beispielsweise das Hindurchführen eines Kabels nicht durch den Anschlag erschwert wird.

Bei einer bevorzugten Ausführungsform ist in dem Aufsetzstück-Leitungsabschnitt eine innenseitig umlaufende Hülse vorgesehen, die vom übrigen Aufsetzstück zumindest abschnittsweise über eine sich in Leitungsrichtung und umlaufend erstreckende Trennfuge getrennt ist und so für eine Anpassung an einen größeren Leitungsaußendurchmesser herausnehmbar ist. Vorzugsweise ist die Hülse einteilig mit dem übrigen Aufsetzstück vorgesehen, ist sie also über eine Materialbrücke damit verbunden. Besonders bevorzugt ist eine hinsichtlich der Leitungsrichtung endseitig der Hülse vorgesehene Materialbrücke, erstreckt sich die Trennfuge also in Leitungsrichtung nicht über die gesamte Länge der Hülse, jedoch umlaufend durchgehend.

Weiter bevorzugt liegt eine solche endseitig der Hülse vorgesehene Materialbrücke dann an dem Ende der Hülse, das nicht zugleich das Ende des Aufsetzstücks bildet, sondern nach innen versetzt ist. Anders ausgedrückt bildet das freie, nicht mit einer Materialbrücke versehene Ende der Hülse zugleich das Ende des Aufsetzstücks (jeweils hinsichtlich der Leitungsrichtung) und ist in Leitungsrichtung auf dieses Ende blickend die Trennfuge sichtbar.

Die Mehrteiligkeit von Aufsetzstück und Einsetzstück ist auch hinsichtlich dieser in Bezug auf die Leitungsrichtung innerhalb des Aufsetzstücks angeordnete Materialbrücke vorteilhaft. Beim Auftrennen der Materialbrücke kann nämlich auch allein das weichere Aufsetzstück gehandhabt werden, sodass die Materialbrücke schon generell leichter zugänglich ist, weil der Aufsetzabschnitt des Aufsetzstücks dort ein Stück weit nach außen gedehnt werden kann, wo ein Schneidwerkzeug zum Auftrennen der Materialbrücke geführt wird. Zudem wäre im Falle eines den Rohrabschnitt des Einsetzstücks verschließenden Deckels die innenliegende Materialbrücke von dieser Seite auch gar nicht zugänglich, soweit das Einsetzstück in das Aufsetzstück eingeschoben ist. Andererseits könnten endseitig des Aufsetzstücks angeordnete Materialbrücken etwa insofern nachteilig sein, als sie dort außen liegend leichter beschädigt werden könnten.

Endseitig an einer zur Anpassung an unterschiedliche Leitungsdurchmesser vorgesehenen Hülse kann etwa auch ein vorstehend beschriebener, sich nach innen erstreckender Steg mit Anschlag vorgesehen sein, der also die Einschiebbarkeit einer Leitung kleineren Durchmessers begrenzt (also bei eingesetzter Hülse). Generell können selbstverständlich auch eine Mehrzahl Hülsen vorgesehen sein, die dann zumindest abschnittsweise über sich in Leitungs- und Umlaufrichtung erstreckende Trennfugen voneinander getrennt sind, vorzugsweise jedoch über endseitige Materialbrücken aneinander und am übrigen Aufsetzstück hängen, und zwar besonders bevorzugt über jeweils am selben Ende der Hülsen angeordnete Materialbrücken. Bevorzugt sind mindestens zwei, wobei (unabhängig von der Mindestanzahl) vorzugsweise nicht mehr als zehn Hülsen, weiter bevorzugt nicht mehr als sechs Hülsen, vorgesehen sind.

Im Falle eines mit einer Hülse versehenen Aufsetzstücks kann bevorzugt ein vorstehend beschriebener, an einem den Rohrabschnitt verschließenden Deckel vorgesehener Abstandshalter einen Anschlag zur Verfügung stellen, und zwar dann vorzugsweise für sämtliche unter Berücksichtigung der herausnehmbaren Hülse(n) möglichen Leitungen unterschiedlichen Außendurchmessers.

In bevorzugter Ausgestaltung ist außenseitig an dem Aufsetzstück eine sich von dem übrigen Aufsetzstück nach außen weg erstreckende, damit einteilige Stegdichtung vorgesehen, und zwar hinsichtlich eines Umlaufs um die Mittenachse der Leitung vollständig umlaufend. Gegenüber einer (unmittelbar benachbarten) Außenwandfläche kann sich die Stegdichtung beispielsweise um mindestens 5 mm, vorzugsweise mindestens 10 mm, weiter bevorzugt mindestens 15 mm, weg erheben (in den den Abstand zur Mittenachse der Leitung bestimmenden Richtungen); mögliche Obergrenzen können (davon unabhängig) etwa bei höchstens 100 mm bzw. höchstens 50 mm liegen. Bevorzugt können auch eine Mehrzahl Stegdichtungen sein, etwa mindestens zwei bzw. mindestens drei und beispielsweise nicht mehr als fünf bzw. vier.

Die Stegdichtung ist (bzw. die Stegdichtungen sind) vorzugsweise in dem Aufsetzabschnitt des Aufsetzstücks angeordnet, also in einem Bereich, der dann beim Vergießen von dem Einsetzstück stabilisiert wird. Dies kann etwa auch insoweit vorteilhaft sein, als dann später bei der weiteren Montage, etwa wenn ein Kabel durch die Durchführung geführt wird, eine das Kabel gegen die Durchführung dichtende Pressdichtung vorzugsweise in den Rohrabschnitt gesetzt wird, weil dieser eine definierte Innenwandfläche zur Verfügung stellt. Beim Verspannen der Pressdichtung drückt diese den Rohrabschnitt dann ein Stück weit nach außen, womit auch das Aufsetzstück und insbesondere die Stegdichtung in ihren Sitz in dem Vergussmaterial gedrückt werden. Ein etwa infolge des Schrumpfens des Vergussmaterials beim Härten auftretender Spalt kann dann so bei der Montage einer Pressdichtung in dem Rohrabschnitt wieder verschlossen werden.

Generell sind das Aufsetzstück und das Einsetzstück jeweils für sich "einteilige" Körper; ein solcher Körper ist beispielsweise für sich nicht zerstörungsfrei in kleinere Teile zerlegbar, also etwa nicht ohne ein Auftrennen von Material. Im Allgemeinen kann ein "einteiliger" Körper beispielsweise auch aus aneinander angeformten Komponenten bestehen, also beispielsweise ein Zwei-Komponenten-Spritzgussteil sein. Vorzugsweise handelt es sich bei dem "einteiligen" Körper um einen monolithischen Körper, der also im Inneren seines Volumens frei von Materialgrenzen zwischen unterschiedlichen Materialien bzw. Materialien unterschiedlicher Herstellungsgeschichte ist.

Vorzugsweise sind das Aufsetzstück und/oder das Einsetzstück jeweils für sich Formteile, werden sie also in einer ihre Gestalt definierenden Kavität geformt, also in ihrer dann in der Durchführung verbauten Form von der Kavität freigegeben. Dies soll selbstverständlich eine Nachbearbeitung im Rahmen des technisch Üblichen nicht ausschließen, sodass also beispielsweise ein Entgraten und/oder Einbringen einer vorstehend genannten Trennfuge möglich ist.

Vorzugsweise ist das Aufsetzstück ein Pressteil, wird es also wie vorstehend beschrieben durch Pressen in einer Form hergestellt, und/oder ist das Einsetzstück ein Spritzgussteil, und zwar ein Einkomponenten-Spritzgussteil.

Die Erfindung betrifft auch einen Durchführungssatz mit einer Mehrzahl vorliegend offenbarten Durchführungen, die sich jeweils im Gesamten voneinander unterscheiden, jedoch mit den gleichen Einsetzstücken versehen sind. Die Einsetzstücke der Durchführungen sind also baugleich, haben also dieselbe Geometrie und dieselben Abmessungen, jedoch unterscheiden sich die Durchführungen in ihrem jeweiligen Aufsetzstück; die Aufsetzstücke geben unterschiedliche Durchgangsöffnungen frei, sind also für unterschiedliche Leitungsdurchmesser ausgelegt.

Aufgrund der Mehrteiligkeit von Aufsetz- und Einsetzstück kann also vorteilhafterweise ein Einsetzstück für eine Mehrzahl Durchführungen verwendet werden, müssen also für die bevorzugte Herstellung nicht mehrere verschiedene Spritzgusswerkzeuge vorgesehen bzw. vorgehalten werden.

Weiter bevorzugt ist ein Durchführungssatz mit einer Mehrzahl Durchführungen, in deren jeweiligem Aufsetzstück-Leitungsabschnitt jeweils wie vorstehend beschrieben eine Hülse vorgesehen ist, die zur Anpassung an einen größeren Leitungsaußendurchmesser herausgenommen werden kann. In dem Durchführungssatz unterscheidet sich die Hülse der einen Durchführung dann sowohl hinsichtlich ihres Innen- als auch ihres Außendurchmessers von der Hülse der mindestens einen weiteren Durchführung. In anderen Worten ist das Aufsetzstück der einen Durchführung also für mindestens zwei Leitungsaußendurchmesser ausgelegt und ist das Aufsetzstück der anderen Durchführung ebenfalls für mindestens zwei Leitungsaußendurchmesser ausgelegt, wobei sich die mindestens zwei Leitungsaußendurchmesser der einen Durchführung von den mindestens zwei Leitungsaußendurchmessern der anderen Durchführung bevorzugt unterscheiden.

Im Allgemeinen können die Durchmesser des einen Aufsetzstücks (also die Leitungsaußendurchmesser, für welche das Aufsetzstück ausgelegt ist) auch sämtlich kleiner oder sämtlich größer als die des anderen Aufsetzstücks sein, können die Aufsetzstücke also beispielsweise aneinander anschließende Größenbereiche abdecken. Andererseits kann es auch bevorzugt sein, dass die Durchmesser zumindest teilweise im selben Größenbereich liegen, also gewissermaßen ineinander geschachtelt sind; es kann das eine Aufsetzstück beispielsweise auf nach dem metrischen System gestaffelte Durchmesser angepasst sein und das andere Aufsetzstück auf etwa in Zollwerten gestaffelte Durchmesser.

Dies kann insoweit Vorteile bieten und von Interesse sein, als beim Einbau der Durchführungen eben nicht allein diese in dem Wand- oder Bodenelement vergossen wird, sondern vor dem Vergießen eine Leitung in den Leitungsabschnitt des Aufsetzstücks eingeschoben wird; die Leitung wird dann gemeinsam mit der Durchführung vergossen, es umschließt das zunächst fließfähige und dann erstarrte Material also jeweils zumindest einen Bereich der Durchführung (des Aufsetzstücks) und der Leitung. Die "Leitung" ist vorzugsweise eine Rohrleitung, etwa ein Kabelschutzrohr oder ein sogenanntes Kanalgrundrohr (KG-Rohr).

Dabei wird mit der Durchführung nicht die Rohrleitung selbst von einer Seite der Wand zur entgegengesetzten Seite hindurchgeführt, sondern dient die Rohrleitung dann selbst als Durchführungsteil, das zusammen mit der Durchführung die Durchgangsöffnung zwischen der einen und der entgegengesetzten Wandseite frei hält (beim Vergießen). Die Rohrleitung verlängert die Durchführung zur entgegengesetzten Seitenfläche des Wand- oder Bodenelements hin. Auch nach dem Härten des Vergussmaterials verbleibt die Rohrleitung als Durchführungsteil zusammen mit der Durchführung in dem Wand- oder Bodenelement, und es kann dann die eigentliche Montageleitung, die also von der einen Seite des Wand- oder Bodenelements durch die Durchführung hindurch auf die entgegengesetzte Seite geführt werden soll, hindurch verlegt werden. Eine solche Montageleitung kann beispielsweise eine Kabelleitung sein, etwa ein Strom-, Daten- und/oder Telekommunikationskabel.

In bevorzugter Ausgestaltung, welche insbesondere die Verwendung einer erfindungsgemäßen Durchführung betrifft, wird eine solche Montageleitung dann mit einer Pressdichtung gegen die Durchführung abgedichtet, wobei die Pressdichtung in dem Einsetzstück-Rohrabschnitt angeordnet wird. Durch Verspannen eines Elastomerkörpers der Pressdichtung in Leitungsrichtung expandiert der Elastomerkörper senkrecht zur Leitungsrichtung und legt sich dabei sowohl an die Montageleitung als auch an eine Innenwandfläche des Rohrabschnitts. Letzteres kann vorteilhafterweise auch ein Andrücken des Aufsetzstücks an das gehärtete Vergussmaterial bewirken (siehe vorne). Vorzugsweise ist das fließfähige Material, welches dann erstarrt, Beton oder Mörtel; besonders bevorzugt ist Beton.

Bevorzugt ist ein Vergießen der Durchführung in dem Wand- oder Bodenelement derart, dass eine bevorzugt vorgesehene Flanschplatte an eine Seitenfläche des Wand- oder Bodenelements grenzt, also auf die Seitenfläche blickend sichtbar ist. Vorzugsweise kann dann der so auf die Seitenfläche blickend sichtbare Übergangsbereich zwischen Flanschplatte und Seitenfläche mit einem Dichtmaterial bedeckt werden, etwa mit einer Dichtmasse, die beispielsweise durch Streichen aufgebracht werden kann.

Die Erfindung betrifft auch ein Verfahren zum Herstellen einer erfindungsgemäßen Durchführung, wobei das Aufsetzstück und das Einsetzstück jeweils für sich in einer Form geformt werden, und zwar das Aufsetzstück bevorzugt durch Pressen (siehe vorne) und/oder das Einsetzstück bevorzugt durch Spritzguss.

Im Folgenden wird die Erfindung anhand eines Ausführungsbeispiels näher erläutert, wobei in der Darstellung auch weiterhin nicht immer im Einzelnen zwischen den verschiedenen Anspruchskategorien unterschieden wird und die Merkmale im Rahmen der nebengeordneten Ansprüche auch in anderer Kombination erfindungswesentlich sein können.

Im Einzelnen zeigt:
- Figur 1: eine erfindungsgemäße Durchführung mit eingeschobener Leitung in einer geschnittenen Schrägansicht;
- Figur 2: das Einsetzstück der Durchführung gemäß Figur 1 in einer Aufsicht in Leitungsrichtung blickend;
- Figur 3: eine geschnittene Seitenansicht der Durchführung gemäß Figur 1 mit eingeschobener Leitung;
- Figur 4: vier über ihre Montageflansche miteinander verbundene Durchführungen in einer Aufsicht in Leitungsrichtung blickend;
- Figur 5: eine weitere erfindungsgemäße Durchführung mit einem gegenüber der Durchführung gemäß Figur 1 modifizierten Einsetzstück.

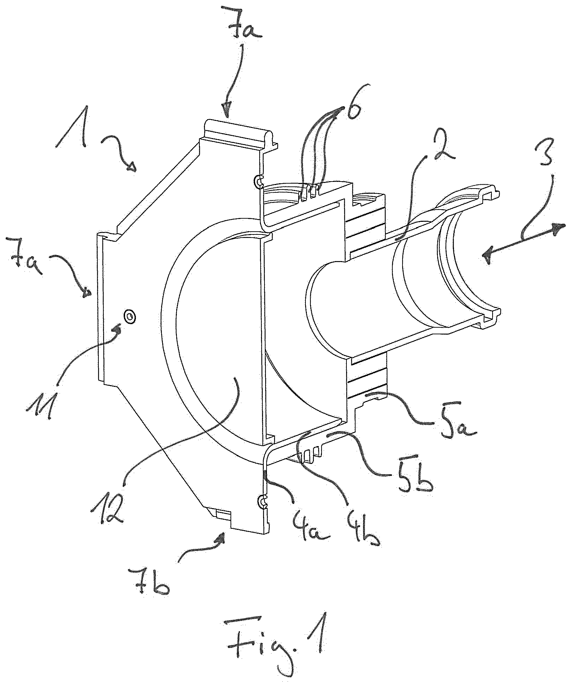

Figur 1 zeigt eine erfindungsgemäße Durchführung 1, in die eine Rohrleitung 2 in Leitungsrichtung 3 eingeschoben ist. Die Durchführung 1 ist aus einem Einsetzstück 4 und einem dazu mehrteiligen Aufsetzstück 5 aufgebaut.

Das Einsetzstück 4 ist ein Spritzgussteil aus ABS, und das Aufsetzstück 5 ist ein Pressteil aus EPDM. Das EPDM des Aufsetzstücks 5 hat eine Shore-Härte von ca. 55 Shore A, und das ABS des Einsetzstücks 4 eine Shore-Härte von ca. 60 Shore D.

Das Einsetzstück gliedert sich in einen Montageflansch 4a und einen (damit monolithischen) Rohrabschnitt 4b. Das Aufsetzstück 5 gliedert sich in einen Leitungsabschnitt 5a, in welchen die Leitung 2 eingeschoben ist, und einen Aufsetzabschnitt 5b. In den Aufsetzabschnitt 5b ist der Rohrabschnitt 4b eingeschoben; letzterer stabilisiert das im Vergleich weichere Aufsetzstück 5 beim Vergießen, also beim Einbau der Durchführung 1.

Figur 3 illustriert dann die Einbausituation, also die gemeinsam mit der Leitung 2 zwischen zwei Schalungselementen 31 montierte Durchführung 1. Die Leitung 2 dient dabei als Durchführungsteil und hält gemeinsam mit der Durchführung 1 eine Durchgangsöffnung zwischen den beiden Seiten des so hergestellten Wandelements frei, durch die dann ein Kabel hindurchgeführt werden kann.

Wird die Schalung mit fließfähigem Beton aufgefüllt, umschließt dieser sowohl die Durchführung 1 als auch den aus der Durchführung 1 hervorragenden Abschnitt der Leitung 2. Um Kriechwege entlang der Außenseite zu blockieren, ist das Aufsetzstück 5 einerseits aus dem weicheren EPDM vorgesehen, das sich gut an den dann gehärteten Beton anlegen kann. Ferner erheben sich gegenüber einer Außenwandfläche des Aufsetzstück-Aufsetzabschnitts 5b auch drei umlaufende Stegdichtungen 6.

Wird später dann ein Kabel durch die Leitung hindurchgeführt, wird hinsichtlich der Leitungsrichtung 3 auf der Höhe der Stegdichtungen 6 eine Pressdichtung in den Rohrabschnitt 4b eingesetzt, um das Kabel gegen die Durchführung 1 zu dichten.

Die Pressdichtung drückt dabei den Rohrabschnitt 4b ein Stück weit nach außen, was auch die Dichtung der Stegdichtungen 6 verbessern helfen kann.

Neben der Stabilisierungsfunktion dient das Einsetzstück 4 zugleich auch einer Montage der Durchführung 1. Der Montageflansch 4a ist als Flanschplatte ausgeführt, an deren außen liegenden Seitenkanten Formschlusselemente 7 vorgesehen sind, nämlich Feder-artige erste Formschlusselemente 7a und dazu komplementäre Nut-artige zweite Formschlusselemente 7b.

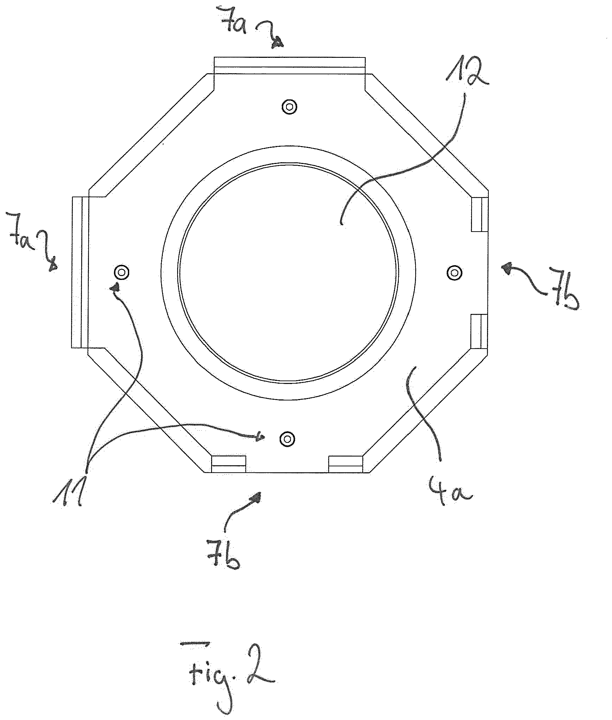

Figur 2 veranschaulicht die Anordnung der Formschlusselemente 7 in einer Aufsicht in Leitungsrichtung 3 auf das Einsetzstück 4, konkret auf die Flanschplatte 4a, blickend. In ein Nut-artiges Formschlusselement 7b kann jeweils ein Feder-artiges Formschlusselement 7a einer jeweilig weiteren Durchführung 1 verrastet werden, und die Feder-artigen Formschlusselemente 7a können jeweils in ein Nut-artiges Formschlusselement 7b einer jeweiligen weiteren Durchführung 1 eingeschoben und darin verrastet werden. Wie insbesondere auch die Seitenansicht in Figur 3 veranschaulicht, sind die Formschlusselemente 7 so ausgeführt, dass ein Feder-artiges Formschlusselement 7a mit einer Hinterschneidung in einem Nut-artigen Formschlusselement 7b zu liegen kommt, die beiden also verrasten.

In der Flanschplatte 4a sind ferner umlaufend verteilt Befestigungslöcher 11 vorgesehen, über welche die Flanschplatte 4a und damit die Durchführung 1 im Gesamten an dem Schalungselement 31 befestigt werden kann, vorzugsweise durch Vernageln.

Werden dann nach dem Vergießen mit und Härten des Betons die Schalungselemente 31 entfernt, muss vor dem Hindurchführen eines Kabels zunächst noch ein den Rohrabschnitt 4b des Einsetzstücks 4 verschließender Deckel 12 entfernt werden. Der Deckel 12 ist monolithisch mit dem übrigen Einsetzstück 4 aus demselben ABS-Material und im selben Prozessschritt (durch Spritzguss) geformt. In einem Übergangsbereich zum übrigen Einsetzstück 4 hin ist die Wandstärke dabei geringer gefasst, ist also eine Sollbruchstelle 13 vorgegeben. Der Deckel 12 kann beispielsweise mit einem Hammer ausgeschlagen werden.

Damit ein dann hindurchgeführtes Kabel beim Hindurchführen selbst oder auch in der späteren Montagesituation am außenseitigen Ende des Rohrabschnitts 4b nicht beschädigt wird, ist ein Übergangsbereich 34 zwischen einer Innenwandfläche 35 des Rohrabschnitts und einer außen liegenden Seitenfläche 36 der Flanschplatte 4a mit einem Krümmungsradius von ca. 5 mm ausgeführt. Es wird also einer Beschädigung des Kabels an einer Kante vorgebeugt.

In den Figuren 1 und 3 sind ferner innenseitig am Leitungsabschnitt 5a des Aufsetzstücks 5 ausgebildete Hülsen 40 zu erkennen, die sich um die Mittenachse der Leitung umlaufend erstrecken und zur Anpassung an unterschiedliche Leitungsaußendurchmesser herausgenommen werden können. Die Hülsen 40 voneinander und vom übrigen Aufsetzstück 5 trennende Trennfugen 41 erstrecken sich nicht über die gesamte in Leitungsrichtung 3 genommene Länge der Hülsen 40, die Hülsen 40 sind über endseitig vorgesehene Materialbrücken 42 aneinander und am übrigen Aufsetzstück 5 gehalten.

In dem Leitungsabschnitt 5a des Aufsetzstücks 5 ist ferner außenseitig umlaufend eine Ausnehmung 45 vorgesehen, in welcher ein (nicht dargestelltes) Spannelement angeordnet ist, nämlich eine Spannschelle. Diese dient einer sicheren Befestigung des Aufsetzstücks 5 auf der Leitung 2.

Die Einschiebbarkeit der Leitung 2 in Leitungsrichtung 3 wird durch einen Anschlag 50 begrenzt, der also für die Anordnung der Durchführung 1 auf der Leitung 2 eine Position vordefiniert.

Figur 4 illustriert vier erfindungsgemäße Durchführungen 1, die über ihre Formschlusselemente 7a, b miteinander zu einem Modul verbunden sind.

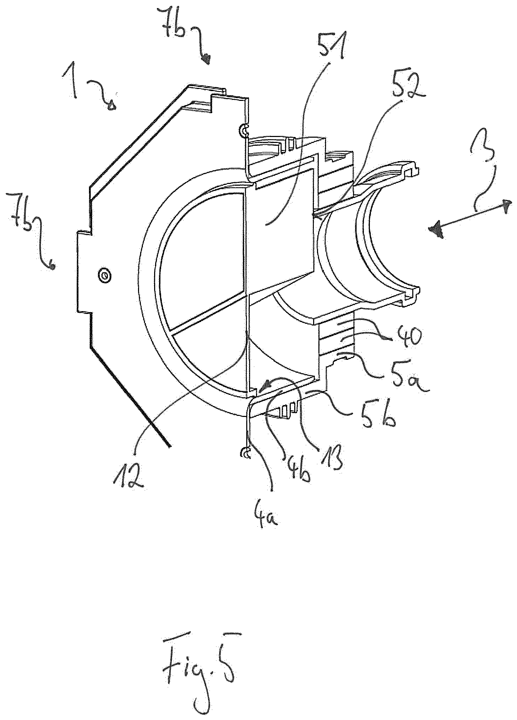

Figur 5 zeigt eine weitere erfindungsgemäße Durchführung 1, die hinsichtlich des Aufsetzstücks 5 zu der vorstehend beschriebenen Durchführung 1 identisch ist; insoweit wird auf die vorstehende Beschreibung verwiesen. Das Einsetzstück 4 gliedert sich ebenfalls in Rohrabschnitt 4b und Montageflansch 4a, wobei der Rohrabschnitt 4b wiederum mit einem einteilig mit dem übrigen Einsetzstück 4 ausgebildeten, also über eine Sollbruchstelle 13 damit verbundenen Deckel 12 verschlossen ist.

An dem Deckel 12 ist in diesem Fall ein sich durch den Rohrabschnitt 4b erstreckender Abstandshalter 51 vorgesehen (monolithisch damit), der an seinem dem Deckel 12 entgegengesetzten Ende einen Anschlag 52 zur Verfügung stellt, bis zu welchem die Leitung 2 einschiebbar ist. Wird der Deckel 12 dann später ausgetrennt, wird damit auch der Abstandshalter 51 aus dem Rohrabschnitt 4b entfernt, sodass das Hindurchführen eines Kabels nicht beeinträchtigt wird.

In Leitungsrichtrung 3 gesehen hat der Abstandshalter 51 drei sich von der Mittenachse der Leitung nach außen erstreckende Schenkel; diese durchsetzen jeweils als sich in Leitungsrichtung 3 erstreckende jeweilige Wand den Rohrabschnitt 4b. In der geschnittenen Schrägansicht sind zwei der drei Schenkel zu erkennen, von einem davon aufgrund der Perspektive jedoch nur ein kleiner Bereich. Ein Vorteil dieses Abstandshalters besteht darin, dass er auch für Leitungen größeren Außendurchmessers, die bei Herausnahme einer/der Hülse(n) 40 eingesetzt werden können, einen Anschlag 52 zur Verfügung stellt.

## Patentansprüche

1. Durchführung (1) zum gemeinsam mit einer Leitung (2) baulich Integrieren in ein Wand- oder Bodenelement, und zwar durch Vergießen mit zunächst fließfähigem und dann erstarrendem Material,
welche Durchführung (1) mehrteilig aufgebaut ist, nämlich aus einem Aufsetzstück (5) und einem Einsetzstück (4), wobei das Aufsetzstück (5) aus einem Aufsetzstückmaterial vorgesehen ist und das Einsetzstück (4) aus einem Einsetzstückmaterial vorgesehen ist, welches Aufsetzstückmaterial weicher als das Einsetzstückmaterial ist,
wobei sich das Einsetzstück (4) in einen Rohrabschnitt (4b) und einen Montageflansch (4a) gliedert,
welcher Rohrabschnitt (4b) sich in Leitungsrichtung (3) erstreckt und welcher Montageflansch (4a) sich senkrecht zur Leitungsrichtung (3) von dem Rohrabschnitt (4a) weg erstreckt,
und wobei sich das Aufsetzstück (5) in einen Leitungsabschnitt (5a) und einen damit einteiligen Aufsetzabschnitt (5b) gliedert,
in welchen Aufsetzabschnitt (5b) das Einsetzstück (4) mit seinem Rohrabschnitt (4b) derart in Leitungsrichtung (3) einschiebbar ist, dass das Einsetzstück (4) das Aufsetzstück (5) beim Vergießen stabilisiert, und
welcher Leitungsabschnitt (5a) für ein Einschieben der Leitung (2) aus einer zur Einschieberichtung des Einsetzstücks (4) entgegengesetzten Richtung ausgelegt ist,
**dadurch gekennzeichnet, dass** der Rohrabschnitt (4b) und der Montageflansch (4a) einteilig ausgebildet sind, wobei der Montageflansch (4a) ein Verbindungselement (7) aufweist, über welches die Durchführung (1) mit einer weiteren, hinsichtlich des Montageflansches (4a) identischen Durchführung (1) verbindbar ist und das als ein erstes Formschlusselement (7a) und ein zweites Formschlusselement (7b) vorgesehen ist, welche Formschlusselemente (7a, 7b) solchermaßen komplementär ausgelegt sind, dass das erste Formschlusselement (7a) einen Formschluss mit dem zweiten Formschlusselement (7b) der weiteren Durchführung (1) bilden kann,
wobei ein Ende des Einsetzstück-Rohrabschnitts (4b) mit einem einteilig mit dem übrigen Einsetzstück (4) ausgebildeten Deckel (12) verschlossen ist, und zwar das Ende, das dem in den Aufsetzstück-Aufsetzabschnitt (5a) einschiebbaren Ende entgegengesetzt liegt.

2. Durchführung (1) nach Anspruch 1, bei welcher das Aufsetzstückmaterial eine Shore-Härte (Shore A) von höchstens 70 Shore A hat und das Einsetzstückmaterial eine Shore-Härte (Shore D) von mindestens 40 Shore D hat.

3. Durchführung (1) nach einem der vorstehenden Ansprüche, bei welcher eine Innenwandfläche des Einsetzstück-Rohrabschnitts (4b) in eine der übrigen Durchführung (1) abgewandte Seitenfläche (36) des endseitig angeordneten Montageflansches (4a) übergeht, wobei dieser Übergang glatt, also kantenfrei, verläuft.

4. Durchführung (1) nach einem der vorstehenden Ansprüche, bei welcher das Aufsetzstück (5) so vorgesehen ist, dass der Leitungsabschnitt (5a) und der Aufsetzabschnitt (5b) in Leitungsrichtung (3) aufeinander folgend anschließen.

5. Durchführung (1) nach Anspruch 1, bei welcher an dem Deckel (12) ein sich durch den Einsetzstück-Rohrabschnitt (4b) erstreckender Abstandshalter (51) vorgesehen ist, der an seinem dem Deckel (12) entgegengesetzten Ende einen Anschlag (52) zur Verfügung stellt, welcher die Einschiebbarkeit der Leitung (2) in den Aufsetzstück-Leitungsabschnitt (5a) begrenzt.

6. Durchführung (1) nach einem der vorstehenden Ansprüche, bei welcher an dem Aufsetzstück (5) ein Anschlag (5b) vorgesehen ist, der die Einschiebbarkeit der Leitung (2) in den Aufsetzstück-Leitungsabschnitt (5a) begrenzt.

7. Durchführung (1) nach einem der vorstehenden Ansprüche, bei welcher in dem Aufsetzstück-Leitungsabschnitt (5a) eine innenseitig umlaufende Hülse (40) vorgesehen ist, die vom übrigen Aufsetzstück (5) zumindest abschnittsweise über eine sich in Leitungsrichtung (3) erstreckende Trennfuge (41) getrennt ist und so für eine Anpassung an einen größeren Leitungsaußendurchmesser herausnehmbar ist.

8. Durchführung (1) nach einem der vorstehenden Ansprüche, bei welcher das Aufsetzstück (5) außenseitig eine Stegdichtung (6) aufweist, die sich von dem übrigen Aufsetzstück (5) nach außen weg erstreckt und umlaufend vorgesehen ist.

9. Durchführung (1) nach einem der vorstehenden Ansprüche, bei welcher das Aufsetzstück (5) und das Einsetzstück (4) jeweils für sich Formteile sind, wobei das Aufsetzstück (5) vorzugsweise ein Pressteil und das Einsetzstück vorzugsweise ein Spritzgussteil ist.

10. Durchführungsanordnung mit einer Durchführung (1) nach einem der vorstehenden Ansprüche, in deren Leitungsabschnitt (5a) eine Leitung (2) eingeschoben ist.

11. Durchführungssatz mit einer Mehrzahl Durchführungen (1) nach einem der Ansprüche 1 bis 9, die untereinander verschieden sind, jedoch jeweils ein Einsetzstück (4) aufweisen, das jeweils zu dem Einsetzstück (4) der mindestens einen weiteren Durchführung (1) in dem Satz identisch ist.

12. Durchführungssatz nach Anspruch 11 mit einer Mehrzahl Durchführungen (1) nach Anspruch 7, bei welchem sich die je Durchführung (1) in dem Aufsetzstück-Leitungsabschnitt (5a) vorgesehene Hülse (40) jeweils von der Hülse (40) der mindestens einen weiteren Durchführung (1) sowohl hinsichtlich ihres Außendurchmessers als auch hinsichtlich ihres Innendurchmessers unterscheidet.

13. Verfahren zum Herstellen einer Durchführung (1) nach Anspruch 9, wobei das Aufsetzstück (5) und das Einsetzstück (4) jeweils für sich in einer Form geformt und von dieser Form freigegeben werden, wobei das Aufsetzstück (5) vorzugsweise in einer Form durch Pressen hergestellt wird und das Einsetzstück vorzugsweise in einer Form durch Spritzguss hergestellt wird.

14. Verwendung einer Durchführung (1) nach einem der Ansprüche 1 bis 9 oder eines Durchführungssatzes nach Anspruch 11 oder 12 zum baulich Integrieren in ein Wand- oder Bodenelement, wobei eine Leitung (2) in den Leitungsabschnitt (5a) eingeschoben wird und dann gemeinsam mit der Durchführung (1) derart mit dem zunächst fließfähigen und dann erstarrenden Material vergossen wird, dass dieses jeweils zumindest einen Bereich des Aufsetzstück-Aufsetzabschnitts (5b) und der Leitung (2) umschließt.

## Claims

1. A feed-through (1) to be structurally integrated into a wall or floor element together with the line (2), namely by means of casting an initially pourable and then solidifying material,
with said feed-through (1) comprising a plurality of pieces, namely an attachment piece (5) and an insert (4), wherein the attachment piece (5) is made from an attachment piece material and the insert (4) is made from an insert material, with the attachment piece material being softer than the insert material,
wherein the insert (4) is divided into a tube section (4b) and a mounting flange (4a),
which tube section (4b) extends in the direction of the line (3) and
which mounting flange (4a) extends perpendicular to the direction of the line (3) away from the tube section (4a),
and wherein the attachment piece (5) is divided into a line section (5a) and an attachment section (5b) forming a single piece with the latter,
into which attachment section (5b) the insert (4) with its tube section (4b) can be inserted in the direction of the line (3) such that the insert (4) stabilises the attachment piece (5) on casting, and
which line section (5a) is designed for inserting the line (2) from an opposite direction to the direction of insertion of the insert (4), **characterised in that**
the tube section (4b) and the mounting flange (4a) are formed as a single piece,
wherein the mounting flange (4a) has a connecting element (7) by means of which the feed-through (1) can be joined to a further feed-through (1) identical in terms of the mounting flange (4a) and which is provided as a first positive locking element (7a) and second positive locking element (7b), with said positive locking elements (7a, 7b) being designed to complement each other such that the first positive locking element (7a) can positively lock with the second positive locking element (7b) of the further feed-through (1),
wherein one end of the tube section (4b) of the insert is sealed with a cover (12) formed as a single piece with the rest of the insert (4), namely the end which is opposite to the end which can be inserted into the attachment section (5b) of the attachment piece.

2. The feed-through (1) according to claim 1, wherein the attachment piece material has a Shore hardness (Shore A) of no more than 70 Shore A and the insert material has a Shore hardness (Shore D) of at least 40 Shore D.

3. The feed-through (1) according to one of the preceding claims, wherein an internal wall surface of the tube section (4b) of the insert transitions to a lateral surface (36) of the mounting flange (4a) located at the end, which lateral surface (36) is facing away from the rest of the feed-through (1), whereby this transition is smooth, in other words is edge-free.

4. The feed-through (1) according to one of the preceding claims, wherein the attachment piece (5) is provided such that the line section (5a) and the attachment section (5b) join onto each other in the direction of the line (3).

5. The feed-through (1) according to claim 1, wherein a spacer (51) extending through the tube section (4b) of the insert is provided on the cover (12) and provides a stop (52) at the end opposite the cover (12) which limits the ability of the line (2) to be inserted into the line section (5a) of the attachment piece.

6. The feed-through (1) according to one of the preceding claims, wherein a stop (50) is provided on the attachment piece (5) which limits the ability of the line (2) to be inserted in the line section (5a) of the attachment piece.

7. The feed-through (1) according to one of the preceding claims, wherein an inner circumferential sleeve (40) is provided in the line section (5a) of the attachment piece, sections of which sleeve (40) at least is separated from the rest of the attachment piece (5) by means of a joint (41) extending in the direction of the line (3) and can thus be removed for adaptation to a line with a wider diameter.

8. The feed-through (1) according to one of the preceding claims, wherein the attachment piece (5) has a ribbed seal (6) on the outside which extends outwards from the rest of the attachment piece (5), which seal is acting as an all-round seal.

9. The feed-through (1) according to one of the preceding claims, wherein the attachment piece (5) and the insert (4) are both moulded parts, whereby the attachment piece (5) is preferably a pressed part and the insert is preferably an injection moulded part.

10. A feed-through system comprising a feed-through (1) according to one of the preceding claims, into the line section (5a) of which a line (2) is inserted.

11. A feed-through set comprising a plurality of feed-throughs (1) according to one of claims 1 to 9, which are all different but each have an insert (4) which is identical to the respective insert (4) of the at least one further feed-through (1) in the set.

12. The feed-through set according to claim 11 comprising a plurality of feed-throughs (1) according to claim 7, wherein the sleeve (40) provided in the line section (5a) of the attachment piece of each feed-through (1) differs from the respective sleeve (40) of the at least one further feed-through (1) both in terms of its outer diameter and also in terms of its inner diameter.

13. A method for manufacturing a feed-through (1) according to claim 9, wherein the attachment piece (5) and the insert (4) are both formed in a mould and released from this mould, whereby the attachment piece (5) is preferably manufactured by means of compression moulding and the insert is preferably manufactured by means of injection moulding.

14. Use of a feed-through (1) according to one of the claims 1 to 9 or a feed-through set according to claim 11 or 12 for structural integration into a wall or floor element, wherein a line (2) is inserted into the line section (5a) and then, together with the feed-through (1), secured by casting the initially pourable and then solidifying material such that this material surrounds at least an area of both the attachment section (5b) of the attachment piece and the line (2).

## Revendications

1. Passage de conduite (1) destiné à être encastré conjointement à une conduite (2) dans un élément mural ou de sol par coulage d'un matériau qui est tout d'abord fluide avant de se solidifier,
lequel passage de conduite (1) est constitué de plusieurs pièces, à savoir une pièce de pose (5) et une pièce d'insertion (4), ladite pièce de pose (5) se composant d'un matériau de pièce de pose et ladite pièce d'insertion (4) se composant d'un matériau de pièce d'insertion, le matériau de la pièce de pose étant plus souple que le matériau de la pièce d'insertion,
ladite pièce d'insertion (4) étant divisée en une section tubulaire (4b) et une bride de montage (4a),
ladite section tubulaire (4b) s'étendant dans le sens de la conduite (3), et
ladite bride de montage (4a) s'étendant perpendiculairement au sens de la conduite (3) en s'éloignant de la section tubulaire (4b),
et ladite pièce de pose (5) étant divisée en une section de conduite (5a) et une section de pose (5b) formées d'un seul tenant,
ladite pièce d'insertion (4) pouvant s'introduire par sa section tubulaire (4b) dans ladite section de pose (5b) dans le sens de la conduite (3) de manière que ladite pièce d'insertion (4) stabilise la pièce de pose (5) au moment du coulage, et
ladite section de conduite (5a) étant conçue pour permettre une introduction de la conduite (2) depuis une direction opposée à la direction d'introduction de la pièce d'insertion (4),
**caractérisé en ce que**
la section tubulaire (4b) et la bride de montage (4a) sont formées d'un seul tenant;
ladite bride de montage (4a) présentant un élément de liaison (7) qui permet de relier le passage de conduite (1) à un autre passage de conduite (1) à bride de montage (4a) identique et qui se présente sous la forme d'un premier élément à complémentarité de forme (7a) et d'un deuxième élément à complémentarité de forme (7b), lesquels éléments à complémentarité de forme (7a, 7b) sont complémentaires dans la mesure où le premier élément à complémentarité de forme (7a) peut donner lieu à une liaison par complémentarité de forme avec le deuxième élément à complémentarité de forme (7b) de l'autre passage de conduite (1),
une extrémité de la section tubulaire (4b) de la pièce d'insertion étant obturée par un couvercle (12) constitué d'un seul tenant avec le reste de la pièce d'insertion (4), à savoir l'extrémité opposée à celle pouvant s'introduire dans la section de pose (5b) de la pièce de pose.

2. Passage de conduite (1) selon la revendication 1, dans lequel le matériau de la pièce de pose présente une dureté Shore (Shore A) ne dépassant pas 70 Shore A et le matériau de la pièce d'insertion présente une dureté Shore (Shore D) d'au moins 40 Shore D.

3. Passage de conduite (1) selon l'une des revendications précédentes, dans lequel une surface de paroi intérieure de la section tubulaire (4b) de la pièce d'insertion est en continuité avec une surface latérale (36) de la bride de montage (4a) située côté extrémité, laquelle surface latérale est détournée du reste du passage de conduite (1), cette continuité s'assurant de façon lisse, c'est-à-dire sans arête.

4. Passage de conduite (1) selon l'une des revendications précédentes, dans lequel la pièce de pose (5) est prévue de manière que la section de conduite (5a) et la section de pose (5b) se font suite dans le sens de la conduite (3).

5. Passage de conduite (1) selon la revendication 1, dans lequel un élément d'écartement (51) s'étendant dans la section tubulaire (4b) de la pièce d'insertion est prévu sur le couvercle (12) et procure, sur son extrémité opposée au couvercle (12), une butée (52) limitant la plage d'introduction de la conduite (2) dans la section de conduite (5a) de la pièce de pose.

6. Passage de conduite (1) selon l'une des revendications précédentes, dans lequel une butée (50) est prévue sur la pièce de pose (5) pour limiter la plage d'introduction de la conduite (2) dans la section de conduite (5a) de la pièce de pose.

7. Passage de conduite (1) selon l'une des revendications précédentes, dans lequel un manchon (40) circonférentiel intérieur est prévu dans la section de conduite (5a) de la pièce de pose en étant séparé du reste de la pièce de pose (5) au moins en partie par un plan de joint (41) s'étendant dans le sens de la conduite (3) et étant ainsi détachable pour permettre une adaptation à une conduite de plus grand diamètre.

8. Passage de conduite (1) selon l'une des revendications précédentes, dans lequel la pièce de pose (5) présente, sur l'extérieur et sur toute sa circonférence, un joint à nervures (6) qui s'étend vers l'extérieur en partant du reste de la pièce de pose (5).

9. Passage de conduite (1) selon l'une des revendications précédentes, dans lequel la pièce de pose (5) et la pièce d'insertion (4) sont chacune une pièce moulée, ladite pièce de pose (5) consistant de préférence en une pièce moulée par compression et ladite pièce d'insertion de préférence en une pièce moulée par injection.

10. Dispositif à passage de conduite comportant un passage de conduite (1) selon l'une des revendications précédentes, dans la section de conduite (5a) de laquelle est introduite une conduite (2).

11. Ensemble de passages de conduite comportant une pluralité de passages de conduite (1) selon l'une des revendications 1 à 9, lesquels sont différents les uns des autres mais présentent chacun une pièce d'insertion (4) qui est identique à la pièce d'insertion (4) respective de l'au moins un autre passage de conduite (1) de l'ensemble.

12. Ensemble de passages de conduite selon la revendication 11 comportant une pluralité de passages de conduite (1) selon la revendication 7, dans lequel le manchon (40) prévu pour chacun des passages de conduite (1) dans la section de conduite (5a) de la pièce de pose se différencie du manchon (40) respectif de l'au moins un autre passage de conduite (1) par son diamètre extérieur ainsi que par son diamètre intérieur.

13. Procédé de fabrication d'un passage de conduite (1) selon la revendication 9, dans lequel la pièce de pose (5) et la pièce d'insertion (4) sont chacune formées dans un moule et sont retirées dudit moule, ladite pièce de pose (5) étant de préférence fabriquée par moulage par compression et ladite pièce d'insertion étant de préférence fabriquée par moulage par injection.

14. Utilisation d'un passage de conduite (1) selon l'une des revendications 1 à 9 ou d'un ensemble de passages de conduite selon la revendication 11 ou 12 en vue de leur encastrement dans un élément mural ou de sol, une conduite (2) étant introduite dans la section de conduite (5a) et étant ensuite retenue dans le passage de conduite (1) par coulage dudit matériau qui est tout d'abord fluide avant de se solidifier et qui entoure au moins une partie de la section de pose (5b) de la pièce de pose et une partie de la conduite (2).
